# EUROPEAN PATENT APPLICATION

(11) **EP 4 507 322 A1**
(43) Date of publication of application: **12.02.2025**
(21) Application number: 23784595.3
(22) Date of filing: 10.03.2023
(51) Int. Cl.: H04Q 9/00, G06Q 50/10

(54) **APPARATUS SETTING ASSISTANCE METHOD AND SERVER DEVICE**

(30) Priority: 07.04.2022 JP 2022064160
(71) Applicant: Panasonic Intellectual Property Management Co., Ltd., Kadoma-shi, Osaka 571-0057 (JP)
(72) Inventor: HIRANO, Jun, Kadoma-shi, Osaka 571-0057 (JP)
(74) Representative: Grünecker Patent- und Rechtsanwälte PartG mbB
(86) International application number: PCT/JP2023/009396
(87) International publication number: WO 2023/195302

(57) **Abstract**

A device setting support method is a device setting support method in which a server device communicably connected to an information terminal supports setting of at least one electrical device controlled by a control device, the method comprising the steps of: acquiring an identifier of the control device from the information terminal; and instructing the information terminal to perform setting of the electrical device upon acquisition of the identifier.

## Description

### Technical Field

The present disclosure relates to a device setting support method and a server device, and more particularly relates to a device setting support method for supporting setting of an electrical device through communication between the server device and an information terminal.

### Background Art

There have heretofore been proposed various support methods (for example, PTL 1) as a technique to support settings for communication and the like of electrical devices installed at a construction site (hereinafter also simply referred to as a "site").

PTL 1 discloses a method for identifying a wiring instrument installed in a facility under the control of a server device, the method including: an acquisition step where an acquisition device acquires from the wiring instrument identification information imparted to the wiring instrument to distinguish the wiring instrument from other wiring instruments of the same type installed in the facility; and an identification step of identifying the wiring instrument based on the identification information acquired. Thus, workability of the installation work for the wiring instrument is improved.

### Citation List

### Patent Literature

PTL 1: Japanese Unexamined Patent Application Publication No. 2021-027702

### Summary of Invention

### Technical Problem

However, in the technique disclosed in PTL 1, a target to be supported for its setting is limited to an electrical device such as the wiring instrument that the server device recognizes in advance. According to the technique disclosed in PTL 1, the server device can only recognize a control device installed at a site, and the settings of electrical devices controlled by the control device cannot be supported. Here, the expression that "the server device recognizes the electrical device" means that the server device holds in advance the identification information of the electrical device to be used for communication.

In other words, there is a problem that the technique disclosed in PTL 1 cannot support the setting of the electrical device when a system installed at the site is a system with a hierarchized control structure, such as one including the control device that can be controlled by the server device and an electrical device that cannot be directly controlled by the server device but can be controlled by the control device.

Therefore, it is an object of the present disclosure to provide a device setting support method and a server device that can support setting of an electrical device in a system with a hierarchized control structure.

### Solution to Problem

A device setting support method according to an embodiment of the present disclosure to achieve the above object is a device setting support method in which a server device communicably connected to an information terminal supports setting of at least one electrical device controlled by a control device, the method including the steps of: acquiring an identifier of the control device from the information terminal; and instructing the information terminal to perform setting of the electrical device upon acquisition of the identifier.

A server device according to an embodiment of the present disclosure to achieve the above object is a server device that is communicably connected to an information terminal and supports setting of at least one electrical device controlled by a control device, including: a communication unit that acquires an identifier of the control device from the information terminal; and a control unit that instructs the information terminal to perform setting of the electrical device via the communication unit upon acquisition of the identifier.

### Advantageous Effects of Invention

According to the present disclosure, a device setting support method and a server device are provided that can support setting of an electrical device in a system with a hierarchized control structure.

### Brief Description of Drawings

[Fig. 1] Fig. 1 is a block diagram illustrating a configuration of a charge and discharge system according to an embodiment.
[Fig. 2] Fig. 2 is a diagram illustrating a control hierarchical structure for a server device and an on-site device illustrated in Fig. 1.
[Fig. 3] Fig. 3 is a flowchart illustrating a schematic flow of installation setting of the charge and discharge system according to the embodiment.
[Fig. 4] Fig. 4 is a situation diagram for explaining a schematic flow of the installation setting illustrated in Fig. 3.
[Fig. 5] Fig. 5 is a sequence diagram illustrating preparatory work in the detailed flow of installation setting of the charge and discharge system according to the embodiment.
[Fig. 6] Fig. 6 is a sequence diagram illustrating an on-site setting process for the control device in the detailed flow of installation setting of the charge and discharge system according to the embodiment.
[Fig. 7A] Fig. 7A is a sequence diagram illustrating an on-site setting process for an electrical device (particularly, a charger/discharger) in the detailed flow of installation setting of the charge and discharge system according to the embodiment.
[Fig. 7B] Fig. 7B is a diagram illustrating a display example on an information terminal for explaining the sequence diagram of Fig. 7A.
[Fig. 8A] Fig. 8A is a sequence diagram illustrating a flow for an electrical device (particularly, a multi-circuit wattmeter) on site in the detailed flow of installation setting of the charge and discharge system according to the embodiment.
[Fig. 8B] Fig. 8B is a diagram illustrating a display example on the information terminal for explaining the sequence diagram of Fig. 8A.
[Fig. 8C] Fig. 8C is a sequence diagram illustrating a flow for another electrical device (specifically, CT) on site in the detailed flow of installation setting of the charge and discharge system according to the embodiment.
[Fig. 8D] Fig. 8D is a diagram illustrating a display example on the information terminal for explaining the sequence diagram of Fig. 8C.
[Fig. 9] Fig. 9 is a sequence diagram illustrating an on-site confirmation process in the detailed flow of installation setting of the charge and discharge system according to the embodiment.

### Description of Embodiments

### (Overview)

The present disclosure provides a device setting support method in which a server device communicably connected to an information terminal supports setting of at least one electrical device controlled by a control device, the method including the steps of: acquiring an identifier of the control device from the information terminal; and instructing the information terminal to perform setting of the electrical device upon acquisition of the identifier.

Accordingly, when the identifier of the control device connected to the server device is acquired, the information terminal is instructed to set the electrical device controlled by the control device. Therefore, the setting of the electrical device is supported even in a system with a hierarchized control structure in which the server device does not recognize the identifier of the electrical device before installation setting.

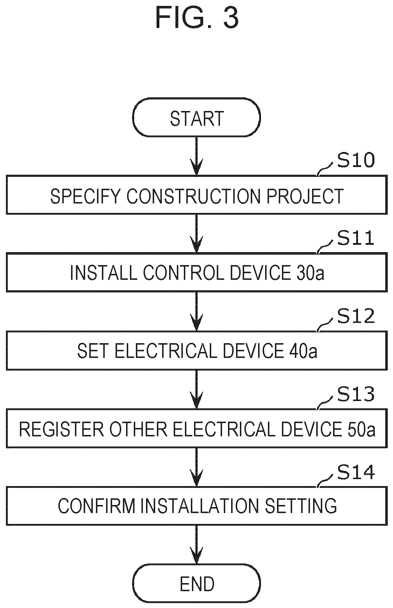

Here, the device setting support method may further include the step of: determining whether or not the identifier is appropriate upon acquisition of the identifier, in which the information terminal is instructed to perform setting of the electrical device when the identifier is determined to be appropriate in the determination (Figs. 3 and 6 to 8C).

Accordingly, when it is determined that the control device connected to the server device is appropriate, the information terminal is instructed to set the electrical device controlled by the control device. Therefore, the setting of the electrical device is supported even in the system with the hierarchized control structure in which the server device does not recognize the identifier of the electrical device before installation setting.

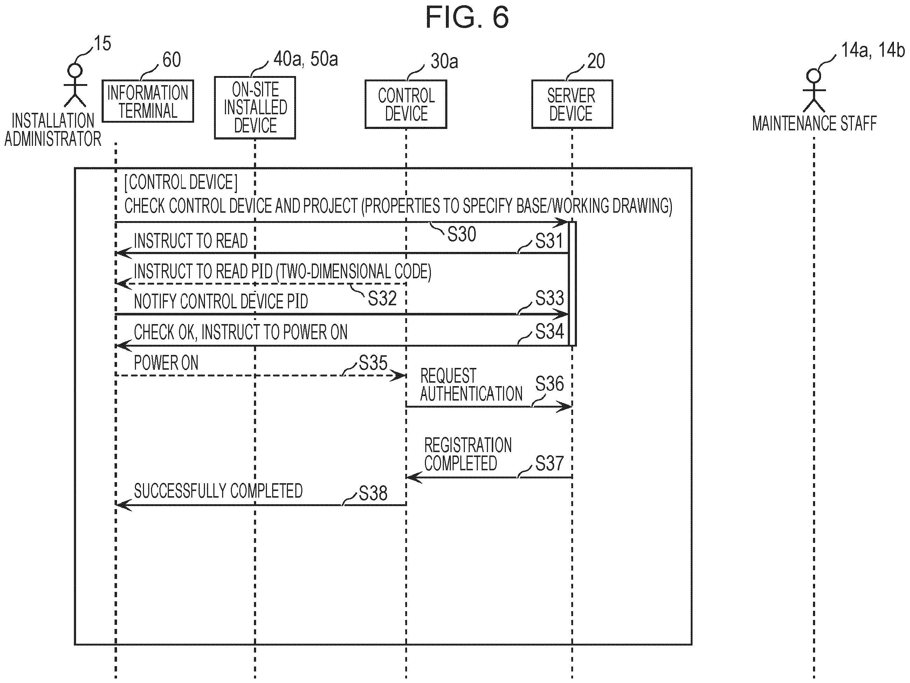

Here, the device setting support method may further include the step of: acquiring information for specifying installation of the at least one electrical device and the control device, in which in the step of determining whether or not the identifier is appropriate, it is determined whether or not the identifier is appropriate by determining whether or not correspondence between the identifier and the information is appropriate (S39 in Fig. 6 and the like). Thus, the server device can reliably determine whether the identifier of the control device is appropriate by checking against the information for specifying the installation of the control device.

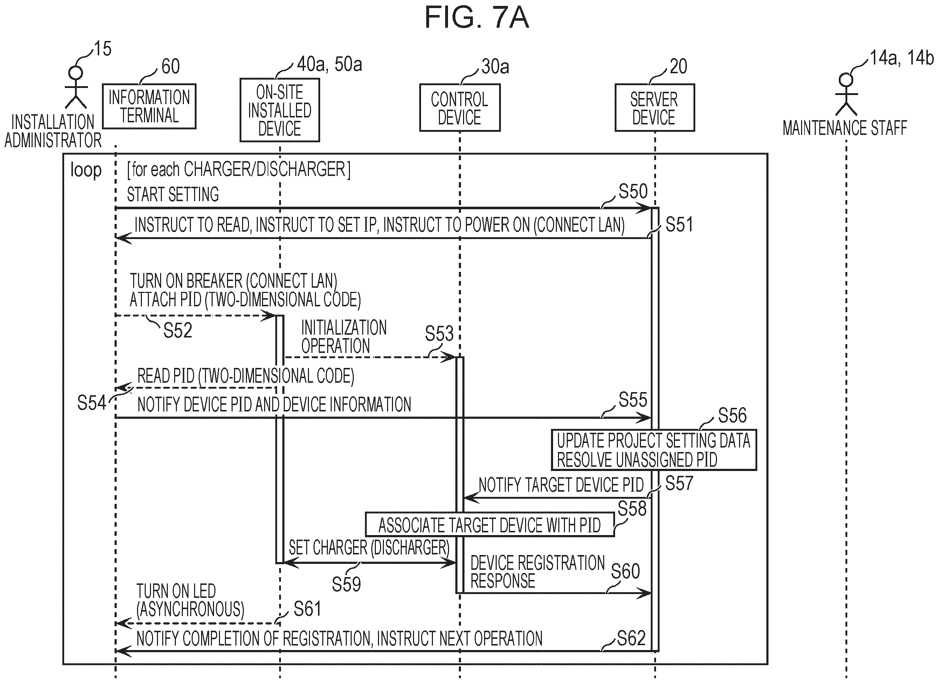

Also, in the step of instructing the information terminal, the information terminal is instructed to perform the setting of the electrical device by displaying information indicating the electrical device to be set on the information terminal (S51 in Fig. 7A and the like). Thus, the electrical device to be set is notified by the server device to the installation administrator.

Also, the device setting support method may further include the steps of: acquiring a first identifier of the electrical device from the information terminal; and transmitting information indicating work details required for setting of the electrical device to the information terminal upon acquisition of the first identifier (S55 and latter step of S56 in Fig. 7A, and the like). Thus, allows the installation administrator can know details of work required for setting of the electrical device.

Also, the device setting support method may further include the steps of: acquiring a first identifier of the electrical device from the information terminal; and transmitting information required for setting of the electrical device to the control device upon acquisition of the first identifier (S55 and S57 in Fig. 7A). Thus, the control device can know the information required for setting of the electrical device and can support the setting of the electrical device.

Also, the device setting support method may further include the steps of: acquiring a first identifier of the electrical device from the information terminal; and storing the first identifier and a prestored second identifier of the electrical device in association with each other upon acquisition of the first identifier (S56 in Fig. 7A and the like). Thus, the server device completes the association between the first physical identifier of the electrical device and the prestored logical second identifier.

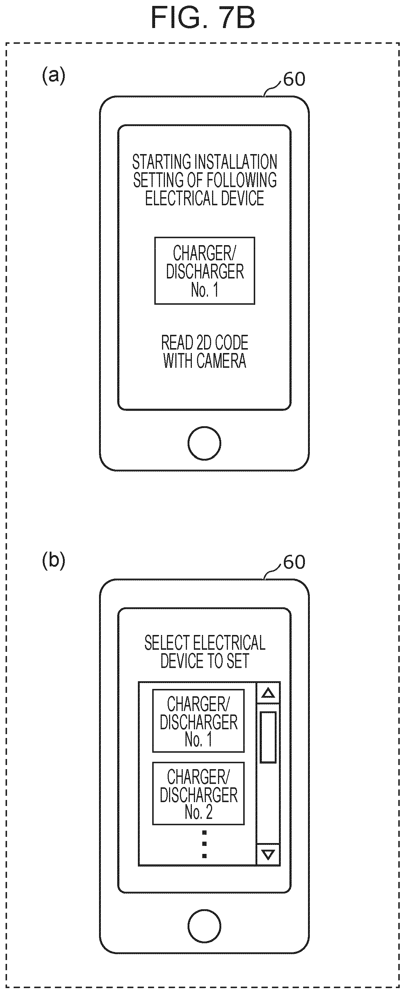

Also, in the device setting support method, in the step of instructing the information terminal, the information terminal is instructed to perform the setting of the electrical device by displaying on the information terminal information for an operator of the information terminal to specify the electrical device to be set (S51 in Fig. 7A, Fig. 7B(b), and the like). Thus, the installation administrator can select an electrical device to be set next from among a plurality of electrical devices.

Also, the device setting support method may further include the steps of: acquiring a first identifier of the electrical device from the information terminal; acquiring information indicating the electrical device specified by the operator; and transmitting to the information terminal information indicating work details required for setting of the electrical device upon acquisition of the information indicating the electrical device specified by the operator and the first identifier (S51 in Fig. 7A, Fig. 7B(b), latter step of S56 in Fig. 7A, and the like). Thus, the installation administrator can know the details of work required for setting of the electrical device selected by himself/herself.

Also, the device setting support method may further include the steps of: acquiring a first identifier of the electrical device from the information terminal; acquiring information indicating the electrical device specified by the operator; and transmitting to the control device information required for setting of the electrical device upon acquisition of the information indicating the electrical device specified by the operator and the first identifier (S51 in Fig. 7A, Fig. 7B(b), S57 in Fig. 7A, and the like). Thus, the control device can know the information required for setting of the electrical device selected by the installation administrator and can support the setting of the electrical device selected by the installation administrator.

Also, the device setting support method may further include the steps of: acquiring a first identifier of the electrical device from the information terminal; acquiring information indicating the electrical device specified by the operator; and storing the first identifier and a prestored third identifier of the electrical device specified by the operator in association with each other upon acquisition of the information indicating the electrical device specified by the operator and the first identifier (S51 in Fig. 7A, Fig. 7B(b), S56 in Fig. 7A, and the like). Thus, the server device completes the association between the first physical identifier of the electrical device selected by the installation administrator and the prestored logical third identifier.

Here, the information required for setting of the electrical device may include a first identifier of the electrical device (latter step of S57 in Fig. 7A and the like). Thus, the installation administrator can know the information required for setting of the electrical device as well as the first identifier of the electrical device.

Also, the identifier of the control device may include an image code (S31 to S33 in Fig. 6 and the like). Thus, the installation administrator can read the identifier of the control device with a camera of the information terminal and send the read identifier to the server device.

The identifier of the control device may also include an identifier read from an RF tag (S31 to S33 in Fig. 6 and the like). Thus, the installation administrator can read the identifier of the control device with an RFID reader mounted on the information terminal and send the read identifier to the server device.

Also, the first identifier of the electrical device may include an image code (S54 to S55 in Fig. 7A and the like). Thus, the installation administrator can read the first identifier of the electrical device with the camera of the information terminal and send the read first identifier to the server device.

Also, the first identifier of the electrical device may also include an identifier read from an RF tag (S54 to S55 in Fig. 7 and the like). Thus, the installation administrator can read the first identifier of the electrical device with an RFID reader mounted on the information terminal and send the read first identifier to the server device.

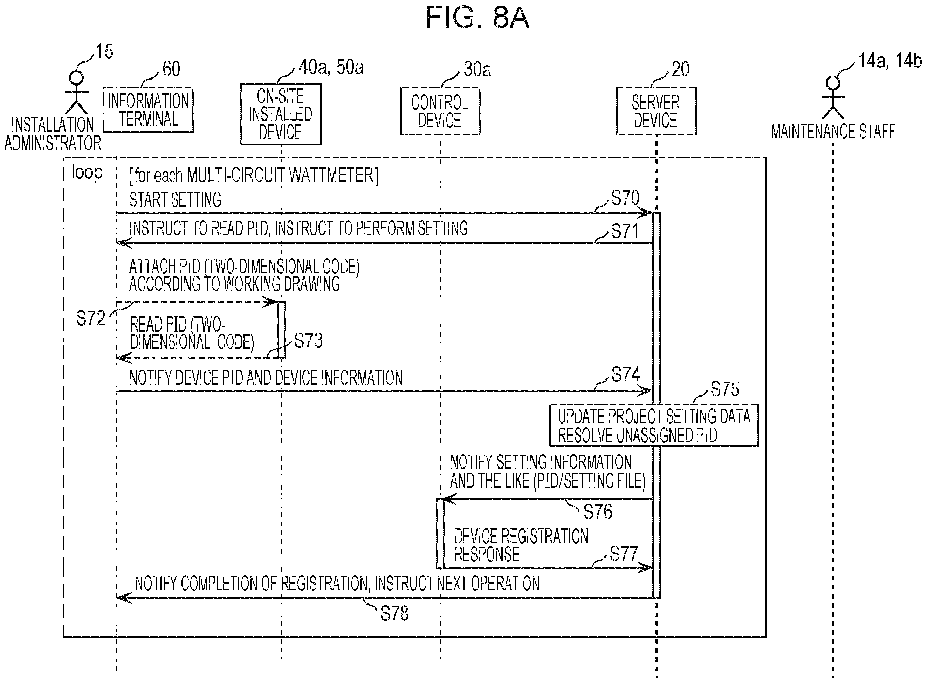

Also, the device setting support method may further include the steps of: transmitting to the information terminal an instruction to acquire a fourth identifier of another electrical device that is communicably or electrically connected to the electrical device; and transmitting to the control device information for checking the connection between the other electrical device and the electrical device upon acquisition of the fourth identifier from the information terminal (S71 to S77 in Fig. 8A and the like). Thus, the electrical device can check the connection between the other electrical device and the electrical device.

Here, the fourth identifier of the other electrical device may include an image code (S73 to S74 in Fig. 8A and the like). Thus, the installation administrator can read the fourth identifier of the other electrical device with the camera of the information terminal and send the read fourth identifier to the server device.

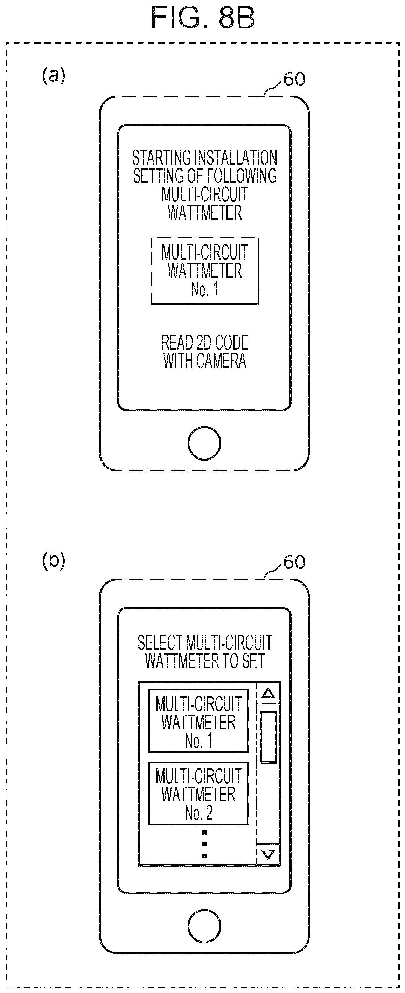

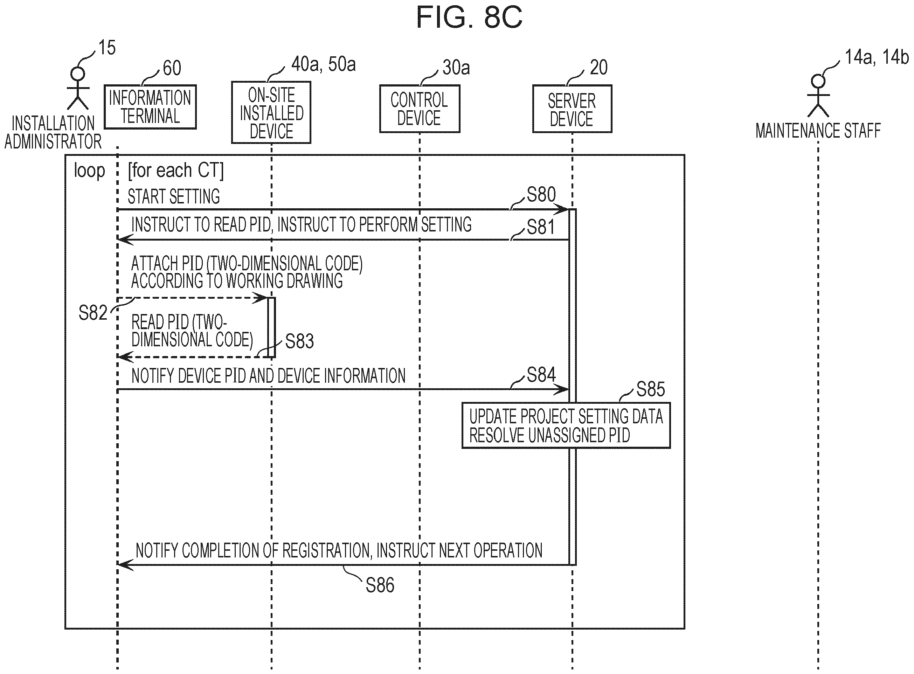

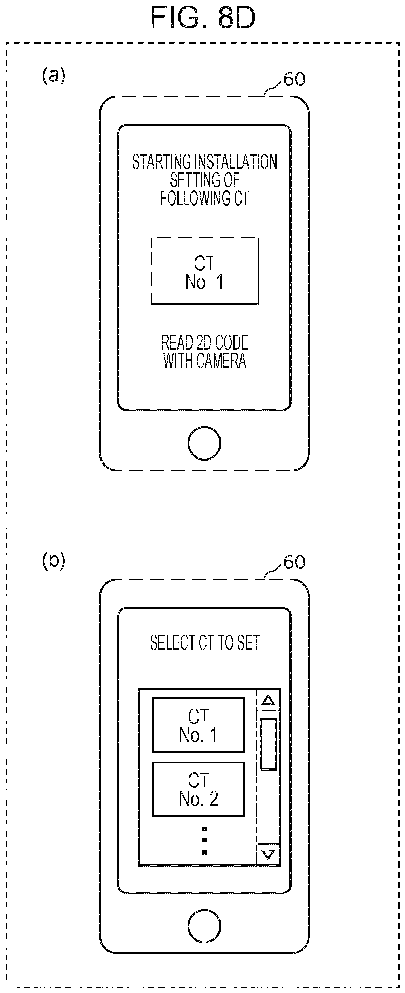

Also, the fourth identifier of the other electrical device may also include an identifier read from an RF tag (S73 to S74 in Fig. 8 and the like). Thus, the installation administrator can read the fourth identifier of the other electrical device with an RFID reader mounted on the information terminal and send the read fourth identifier to the server device.

Also, the device setting support method may further include the steps of: transmitting to the information terminal an instruction to acquire a fifth identifier of another electrical device that requires communication connection or electrical connection with the electrical device; and instructing the information terminal to establish communication connection or electrical connection between the other electrical device and the electrical device upon acquisition of the fifth identifier from the information terminal (S71 to S75 in Fig. 8A and the like). Thus, the installation administrator can perform the communication connection or electrical connection through communication connection or electrical connection between the other electrical device and the electrical device.

Here, the fifth identifier of the other electrical device may include an image code (S73 to S74 in Fig. 8A). Thus, the installation administrator can read the fifth identifier of the other electrical device with the camera of the information terminal and send the read fifth identifier to the server device.

Also, the fifth identifier of the other electrical device may also include an identifier read from an RF tag (S73 to S74 in Fig. 8A and the like). Thus, the installation administrator can read the fifth identifier of the other electrical device with an RFID reader mounted on the information terminal and send the read fifth identifier to the server device.

Also, a server device is a server device that is communicably connected to an information terminal and supports setting of at least one electrical device controlled by a control device, including: a communication unit that acquires an identifier of the control device from the information terminal; and a control unit that instructs the information terminal to perform setting of the electrical device via the communication unit upon acquisition of the identifier.

Accordingly, when the identifier of the control device connected to the server device is acquired, the information terminal is instructed to set the electrical device controlled by the control device. Therefore, the setting of the electrical device is supported even in the system with the hierarchized control structure in which the server device does not recognize the identifier of the electrical device before installation setting.

Here, when the server device acquires the identifier, the control unit determines whether or not the identifier is appropriate, when it is determined that the identifier is appropriate, the server device instructs the information terminal to perform setting of the electrical device through the communication unit (Fig. 3 and Figs. 6 to 8C).

Accordingly, upon determining that the connected control device is appropriate, the server device instructs the information terminal to set the electrical device controlled by the control device. Therefore, the setting of the electrical device is supported even in the system with the hierarchized control structure in which the server device does not recognize the identifier of the electrical device before installation setting.

The device setting support method is a method in which a control device supports setting of at least one electrical device controlled by the control device, under the control of a server device communicably connected to an information terminal, the method may include the steps of: acquiring from the server device information required for setting of the electrical device, including a first identifier of the electrical device transmitted from the information terminal to the server device; acquiring a sixth identifier of the electrical device from the electrical device during setting of the electrical device; and storing the first and sixth identifiers in association with each other (S53, S57 to S58 in Fig. 7A and the like).

Thus, the control device holds the sixth identifier of the electrical device for communication, which is acquired from the electrical device, and the first identifier, which is a two-dimensional code of the electrical device acquired from the server device, in association with each other, thus making it possible to realize communication mediation (identifier conversion) between the downstream electrical device and the upstream server device.

### (Embodiment)

Hereinafter, embodiments of the present disclosure will be described in detail with reference to the drawings. It should be noted that the embodiments described below are each a specific example of the present disclosure. The numerals, shapes, materials, constituent elements, the arrangement and connections of the constituent elements, steps, order of steps, and the like discussed in the following embodiments are only exemplary and are not construed to limit the present disclosure. The drawings are not necessarily to scale. In each drawing, substantially the same configurations are denoted by the same reference numerals to eliminate or simplify overlapped description.

Hereinafter, a device setting support method and a server device according to the present disclosure will be described using an example of application thereof to a charge and discharge system for charging and discharging an electric vehicle.

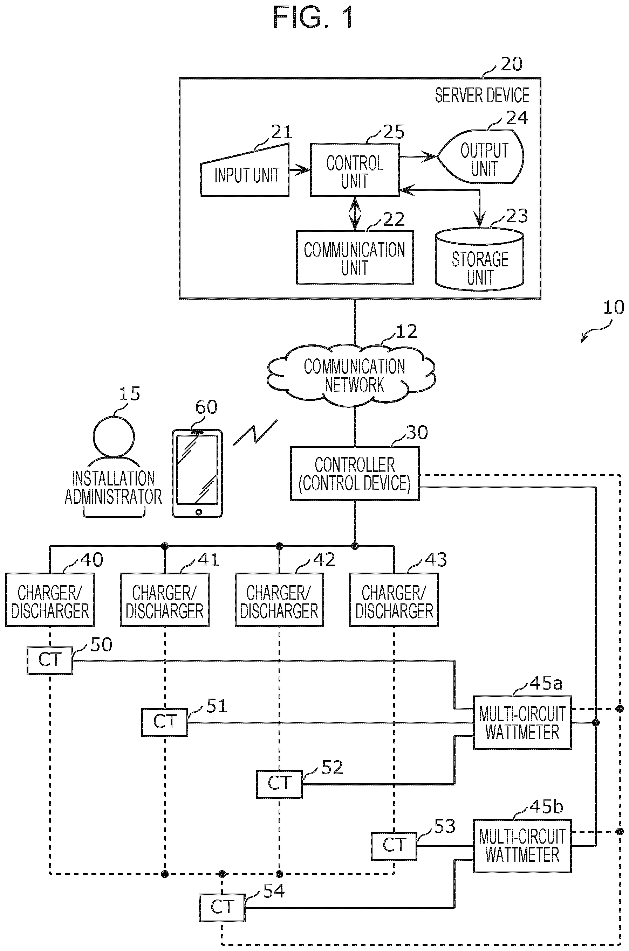

Fig. 1 is a block diagram illustrating a configuration of a charge and discharge system 10 according to an embodiment. The charge and discharge system 10 includes a server device 20 included in a cloud, a controller 30 connected to the server device 20 through a communication network 12 such as the Internet, chargers/dischargers 40 to 43 controlled by the controller 30, multi-circuit wattmeters 45a and 45b, current transformers (CTs) 50 to 54 electrically connected to the multi-circuit wattmeters 45a and 45b, and an information terminal 60 such as a smartphone carried by an installation administrator 15 on site and connected to the server device 20 through the communication network 12. In this drawing, solid lines indicate communication connections, and dashed lines indicate power transmission/reception.

Among these constituent components, the controller 30, the chargers/dischargers 40 to 43, the multi-circuit wattmeters 45a and 45b, and the CTs 50 to 54 are devices installed on site (hereinafter also referred to as "on-site installed devices"). The information terminal 60 is a portable information terminal including a camera that reads a two-dimensional code, a touch panel display, a communication unit that connects to the server device 20 through the communication network 12, a processor that executes installed web applications and the like, a storage unit, and the like. The server device 20 according to this embodiment is a device that manages one charge and discharge system 10 but is not limited thereto and may manage a plurality of charge and discharge systems.

The server device 20 is a cloud device that operates and manages the charge and discharge system 10 and supports settings related to communication and the like of on-site installed devices, and is a computer device that creates a website, for example. The server device 20 includes an input unit 21, a communication unit 22, a storage unit 23, an output unit 24, and a control unit 25.

The input unit 21 is an input device such as a keyboard that receives instructions from a user. The communication unit 22 is a communication interface for communicating with communication devices including the controller 30 and the information terminal 60 through the communication network 12. The storage unit 23 is a storage device, such as a hard disk, that holds various information for device setting support and various information and programs for a website for operation management of the charge and discharge system 10. The output unit 24 is an output device such as a display that presents various information to the user. The control unit 25 is a processor that executes programs held in the storage unit 23 to communicate with the user through the input unit 21 and the output unit 24, to communicate with the controller 30, the information terminal 60, and the like through the communication unit 22, to execute device setting support according to various information held in the storage unit 23, to register various information obtained by the device setting support in the storage unit 23, and to operate and manage the charge and discharge system 10 according to the registered various information.

The controller 30 is a top-level control device that is installed on-site. The controller 30 is a communication device, such as a gateway, a router device or the like, for example, which advances the device setting support during installation setting by communicating with the chargers/dischargers 40 to 43 and the multi-circuit wattmeters 45a and 45b and by communicating with the server device 20 through the communication network 12, and also controls the chargers/dischargers 40 to 43 and the multi-circuit wattmeters 45a and 45b under the control of the server device 20 after the installation setting.

The chargers/dischargers 40 to 43 are an example of an electrical device controlled by the controller 30 (that is, a device to be controlled). To be more specific, the chargers/dischargers are connected to an electric vehicle to charge and discharge the electric vehicle. Note that the chargers/dischargers 40 to 43 may be chargers that only charge the electric vehicle.

The multi-circuit wattmeters 45a and 45b are an example of an electrical device controlled by the controller 30 (that is, a device to be controlled). To be more specific, the multi-circuit wattmeters 45a and 45b are each an energy monitor for an electric power system circuit that aggregates and manages power detected by the CTs 50 to 54 and provides the user with various information obtained by the aggregation and management.

The CTs 50 to 54 are an example of another electrical device that is in a communication connection or electrical connection with the electrical device, or another electrical device that requires communication connection or electrical connection with the electrical device. To be more specific, the CTs 50 to 54 are current sensors that are communicably or electrically connected to the multi-circuit wattmeters 45a and 45b, respectively, are provided in a main circuit and a branch circuit in power wiring, measure the power passing through those circuits, and notify the multi-circuit wattmeters 45a and 45b of the measured power.

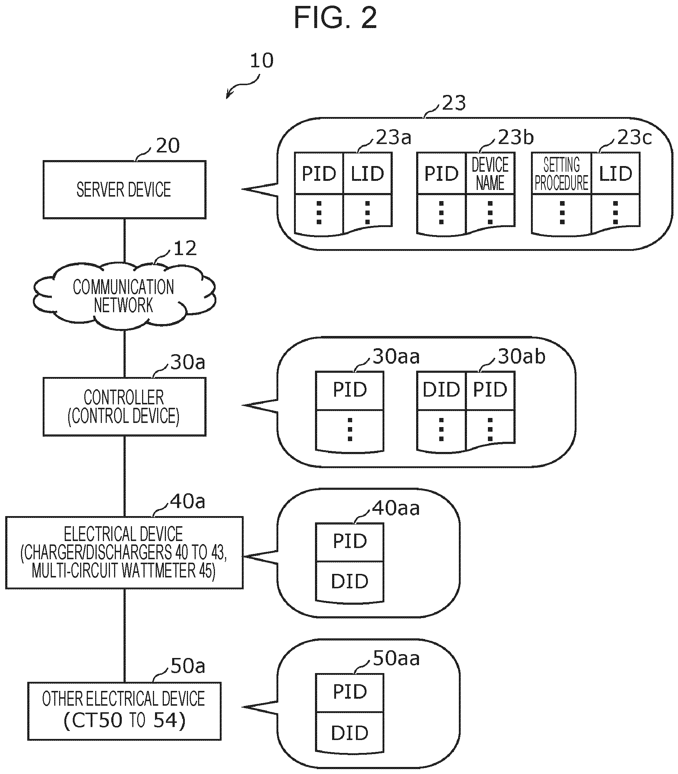

Fig. 2 is a diagram illustrating a control hierarchical structure for the server device 20 and the on-site installed devices illustrated in Fig. 1. Here, the on-site installed devices illustrated in Fig. 1 are described with names for device installation support (a control device 30a, an electrical device 40a, and another electrical device 50a). In Fig. 2, LID, PID, and DID are identifiers of the on-site installed devices, and are respectively a logical identifier for management in the server device 20, a physical identifier printed as a two-dimensional code on a nameplate such as a sticker attached to the on-site installed device, and a physical identifier for communication that is owned in advance by the on-site installed device. Note that the identifier PID is not limited to the two-dimensional code as long as the identifier is an image code printed on a sticker, and may be a one-dimensional code (that is, a barcode), for example. The identifier PID may be an identifier expressed as a character string that can be read by image recognition. The identifier PID may be an identifier read from an RF tag.

The server device 20 is a device in charge of processing procedure for installation setting of the entire charge and discharge system 10, and has tables 23a to 23c held as master data in the storage unit 23. For the control device 30a, the electrical device 40a, and the other electrical device 50a, the tables 23a to 23c hold correspondence (association) between the identifiers PID and LID, correspondence between the identifier PID and a device name, and correspondence between setting information and the identifier LID, respectively.

More specifically, in the table 23a, the correspondence between the identifiers PID and LID is recorded for a construction project and the control device 30a before on-site installation setting. Also, for the electrical device 40a and the other electrical device 50a, the correspondence between the identifiers PID and LID is recorded according to the installation setting.

In the table 23b, the correspondence between the identifier PID and physical information is recorded for the construction project and the control device 30a before on-site installation setting. On the other hand, for the electrical device 40a and the other electrical device 50a, the correspondence between the identifier PID and the physical information is recorded at the time of installation setting on site. The physical information includes the device name, the identifier DID of the control device 30a, the identifier DID of the electrical device, and the like. In this example, the physical information is associated with the identifier PID, but the physical information may be associated with the identifier LID. Note that the physical information is information that is associated with a physical object for data management in the server device 20. Examples of the physical information include information for specifying a predetermined device, such as a serial number. When a predetermined device is deleted or replaced on site, the physical information corresponding to this predetermined device is also deleted or changed.

In the table 23c, for the construction project, the control device 30a, the electrical device 40a, and the other electrical device 50a, the correspondence between logical information and the identifier LID is recorded before on-site installation setting. The logical information includes, for example, the setting information of the control device 30a, the electrical device 40a, or the other electrical device 50a, contract information of the construction project, and the like. The setting information is, for example, a setting procedure for the control device 30a, the electrical device 40a, or the other electrical device 50a. In Fig. 2, the table 23c shows the correspondence between the setting procedure as an example of the logical information and the identifier LID.

The logical information is information associated with a logical event in terms of data management in the server device 20. Examples of the logical information include information such as the name of a store that provides a predetermined service using an installed device. When the name of the store in service is changed even though the installed device is not changed (deleted or replaced), the logical information corresponding to the name of the store is also changed.

Both physical information and logical information are handled separately for the convenience of service operation. Therefore, the same information can be physical information or logical information depending on how the information is handled.

For example, in order to bundle installation setting work in a predetermined construction project as a service, an identifier LID is assigned to project information indicating a predetermined construction project. This identifier LID is associated with various information related to the predetermined construction project, such as equipment to be used, contractors, date and time of construction.

On the other hand, in order to associate the project information with the installation setting work on site, an identifier PID is assigned to the project information, and a sticker with a two-dimensional code printed thereon, indicating the identifier PID, is attached to a work instruction sheet. This identifier PID is also used as an ID to log in to a web application used for installation setting work on site. In such a case, the above project information is physical information as well as logical information.

In addition, an identifier PID may be assigned to predetermined equipment to be used, and this identifier PID may be associated with physical information such as a serial number and manufacturing date of the predetermined equipment to be used. This identifier PID may be associated with an identifier LID assigned to the name of the predetermined equipment to be used as a service. In other words, the identifier PID or the identifier LID itself can also be handled as the physical information or logical information and associated with another identifier PID or LID.

As described above, the server device 20 has the identifiers PID and LID and the setting information prestored in the storage unit 23 for the control device 30a, and also has the setting information such as the types, number of devices, and setting procedures prestored in the storage unit 23 for the electrical device 40a and the other electrical device 50a. However, for the electrical device 40a and the other electrical device 50a, the server device 20 cannot know beforehand the physical identifier PID (that is, a two-dimensional code given on site) for individual identification and the identifier DID (that is, a name used in communication). Therefore, the logical identifier LID (name on the server device 20) is assigned (table 23c). The tables 23a to 23c as described above are provided for each construction project and associated with a logical identifier LID for specifying the construction project.

The control device 30a corresponds to the controller 30 in Fig. 1, which is a top-level device installed on site. The control device 30a has an identifier PID assigned (in other words, printed on a sticker) at the time of installation setting on site as a physical identifier 30aa for individually identifying a device, and an identifier DID for communication that is owned in advance by the control device. The server device 20 recognizes in advance the two-dimensional code identifier PID for only this control device 30a among the on-site installed devices (table 23a). The communication from the server device 20 to the electrical device 40a is performed via the control device 30a. The control device 30a acquires the correspondence (association) between the identifier PID and the identifier DID for the electrical device 40a and the other electrical device 50a through the installation setting, and holds the correspondence as a management table 30ab.

The electrical device 40a is an example of a device to be controlled by the control device 30a, and corresponds to the chargers/dischargers 40 to 43 and the multi-circuit wattmeters 45a and 45b in Fig. 1. The electrical device 40a has an identifier PID assigned (in other words, printed on a sticker) at the time of installation setting on site as a physical identifier 40aa for individually identifying a device, and an identifier DID for communication that is owned in advance by the electrical device 40a. The electrical device 40a cannot be directly controlled by the server device 20 but is indirectly connected to the server device 20 via the control device 30a. At the time of installation setting, a two-dimensional code identifier PID is assigned to the electrical device 40a and is notified to the server device 20. Then, the server device 20 associates (registers in the table 23a) the identifiers LID and PID of the electrical device 40a and sends the setting information of the electrical device 40a to the control device 30a, thus setting the electrical device 40a in a controllable state. The server device 20 notifies the control device 30a of such necessary information at the timing of installation setting also when a special program or device-specific information for control by the control device 30a is required.

The other electrical device 50a is an example of another device to be managed that is in a communication connection or electrical connection with the electrical device 40a, or an example of another device to be managed that requires communication connection or electrical connection with the electrical device. The other electrical device 50a corresponds to the CTs 50 to 54 in Fig. 1. The other electrical device 50a has an identifier PID assigned (in other words, printed on a sticker) at the time of installation setting on site as a physical identifier 50aa for individually identifying a device, and an identifier DID for communication that is owned in advance by the other electrical device 50a. The other electrical device 50a is not directly controlled by the server device 20 but is managed as a series of construction projects as a target related to installation setting. As for the other electrical device 50a, since the server device 20 cannot specify the target on site, a two-dimensional code identifier PID is assigned to the other electrical device 50a on site and is notified to the server device 20. Thus, the server device 20 associates (registers in the table 23a) the identifiers LID and PID of the other electrical device 50a.

Next, description is given of a flow of installation setting (that is, a device setting support method) for the charge and discharge system 10 according to the embodiment configured as described above.

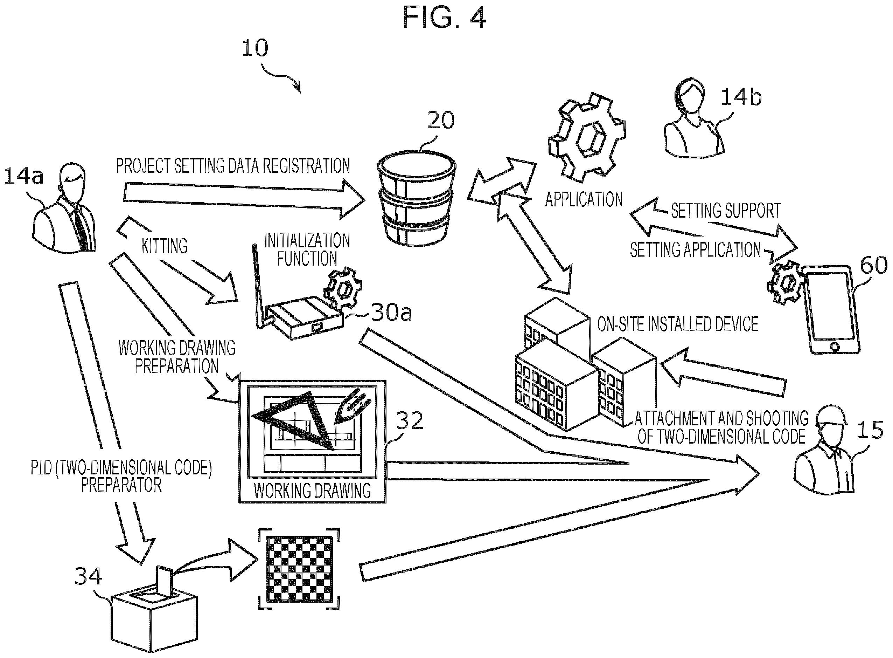

Fig. 3 is a flowchart illustrating a schematic flow of installation setting of the charge and discharge system 10 according to the embodiment. Fig. 4 is a situation diagram for explaining the schematic flow of installation setting illustrated in Fig. 3.

Prior to the installation setting, as illustrated in Fig. 4, a maintenance staff 14a registers project setting data (identifiers LID and PID, construction site information, and the like) on a construction project in the tables 23a to 23c for the server device 20, and performs kitting (that is, initialization) of the control device 30a. Then, the maintenance staff 14a hands over to an installation administrator 15 the control device 30a after the kitting, a working drawing 32 of construction work, and a bundle of two-dimensional code stickers 34, each having the identifier PID printed thereon, to be attached on site. The maintenance staff 14a and 14b are persons who support the installation setting of the charge and discharge system 10. It is assumed that the installation work (that is, the electrical installation work and the communication work) of the electrical device 40a and the other electrical device 50a at the site has been completed. In addition, the status and timing of installation work may differ depending on the site and the status of the project, and the work details equivalent to installation work may be delayed or put forward or may be added or omitted. However, it is sufficient that each installation work is completed before the setting work of each device, and the installation work situation in the procedure described below is an example.

First, upon receiving the control device 30a, the working drawing 32, and the bundle of two-dimensional code stickers 34 from the maintenance staff 14a, the installation administrator 15 bring them to the site and accesses the server device 20 with the information terminal 60 to specify a construction project (S10 in Fig. 3). More specifically, the installation administrator 15 uses a web application in the information terminal 60 to log in to the server device 20 with an ID and a password (PW) issued in advance for each construction project, and the server device 20 checks the login ID as the information to specify the construction project. If OK, the installation administrator 15 is instructed by the server device 20 to install (or set) the control device 30a. Here, the ID to log into the web application is an example of information (identifier PID) to specify the construction project. Note that the information to specify the construction project is not limited to this example but may be a two-dimensional code indicating the identifier PID, for example.

Next, the installation administrator 15 installs the control device 30a (S11 in Fig. 3). More specifically, the installation administrator 15 installs the control device 30a at the site and uses the information terminal 60 to read the identifier PID printed on the sticker attached to the control device 30a and notify the server device 20 as illustrated in Fig. 4. Then, the installation administrator 15 waits for confirmation by the server device 20, and is informed of the completion of the confirmation by the server device 20 through notification or the like to the information terminal 60 such as blinking of an LED of the control device 30a.

Here, the confirmation by the server device 20 is to check if the identifier PID of the control device 30a read by the information terminal 60 is appropriate. For example, it may be determined whether or not the identifier PID of the control device 30a read by the information terminal 60 is appropriate by determining whether or not the correspondence between the information to specify he construction project received by the server device 20 and the identifier PID of the control device 30a read by the information terminal 60 is appropriate. In this example, the determination is made as follows. The login ID for the web application corresponding to the identifier PID to specify the construction project and the identifier LID to specify the construction project are associated in advance in the server device 20. When the ID is entered to log in to the web application, the identifier PID of the control device 30a associated with the identifier LID to specify the construction project associated with the login ID for the web application is checked against the identifier PID of the control device 30a read by the information terminal 60. When the both identifiers match as a result of this checking, it is determined that the identifier PID of the control device 30a read by the information terminal 60 is appropriate.

The identifier PID that is the information to specify the construction project may also be a two-dimensional code indicating this identifier PID. In this event, the two-dimensional code is read with the information terminal 60 to log in to the web application.

The PW may also be entered to log in to the web application. In this event, not only the ID to log in to the web application but also the PW may be used as the information (identifier PID) to specify the construction project.

When the identifier PID of the control device 30a is not pre-registered in the server device 20 by the maintenance staff 14a, the identifier PID of the control device 30a read by the information terminal 60 may be registered in the server device 20, eliminating the need to check if the identifier PID of the control device 30a read by the information terminal 60 is appropriate.

When there is no problem with the confirmation by the server device 20, the installation administrator 15 is instructed by the server device 20 via the information terminal 60 to start setting of the electrical device 40a.

Next, the installation administrator 15 performs setting of the electrical device 40a (S 12 in Fig. 3). More specifically, as illustrated in Fig. 4, the installation administrator 15 is instructed by the server device 20 to attach the two-dimensional code sticker 34 to one electrical device 40a. Thus, after selecting a device name and the like for the construction project, the installation administrator 15 attaches an arbitrarily selected two-dimensional code sticker 34 to the electrical device 40a, reads the identifier PID printed on the attached sticker with the information terminal 60, and notifies the server device 20 of the identifier PID. In response, the server device 20 associates the identifier PID transmitted from the site with the preset logical identifier LID (registers the identifiers in the table 23a), transmits to the information terminal 60 information indicating work details required for setting of the electrical device 40a (for example, work instructions required for the setting), to the information terminal 60, and transmits information, programs, and the like required for setting of the electrical device 40a to the control device 30a. Note that the setting may be confirmed by reading the two-dimensional code of the electrical device 40a whose setting has been completed and notifying to the server device 20. This prevents setting errors. In addition, when there is a subordination relationship between the electrical devices 40a or a relationship between the control device 30a and the electrical device 40a, the two-dimensional code of the electrical device 40a subordinate to a predetermined electrical device 40a or of the electrical device 40a connected to the control device 30a by read and notified to the server device 20, thereby setting linkage setting between the electrical devices 40a and between the control device 30a and the electrical device 40a.

When the setting of the electrical device 40a is completed, the control device 30a notifies the server device 20 of the completion of the setting. Upon being notified, the server device 20 notifies the information terminal 60 of the completion of the setting of the electrical device 40a. Alternatively, the server device 20 instructs the installation administrator 15 via the information terminal 60 to perform setting of the next electrical device 40a. This step S12 is repeated by the number of the electrical devices 40a installed on site.

Next, the installation administrator 15 registers another electrical device 50a (S13 in Fig. 3). More specifically, as illustrated in Fig. 4, the installation administrator 15 is instructed via the information terminal 60 to attach the two-dimensional code sticker 34 to another electrical device 50a. Therefore, after selecting the device name and the like for the construction project, the installation administrator 15 attaches one arbitrarily selected two-dimensional code sticker 34 to the other electrical device 50a. Then, the identifier PID printed on the attached sticker is read by the information terminal 60 and notified to the server device 20. In response, the server device 20 associates the identifier PID transmitted from the site with the preset logical identifier LID (registers the identifiers in the table 23a). This step S13 is repeated by the number of the other electrical devices 50a installed on site.

Finally, the installation administrator 15 confirms the installation settings (S14 in Fig. 3). More specifically, as illustrated in Fig. 4, the installation administrator 15 accesses the server device 20 using the information terminal 60 to follow a confirmation procedure corresponding to the control device 30a, the electrical device 40a, and the other electrical device 50a and see if there are any errors in these settings. To be more specific, the installation administrator 15 may designate the name of the target on-site installed device via the information terminal 60, then read the two-dimensional code via the information terminal 60 and notify to the server device 20. After the notification, when the server device 20 confirms the installation settings and determines that there is no problem, the information terminal 60 may display information indicating the completion of the confirmation. Alternatively, the control device 30a may perform a specific operation to indicate the completion of the confirmation or the electrical device 40a may perform a specific operation to indicate the completion of the confirmation. Note that the above specific operation may be an operation of notifying the outside by sound, light or the like, for example. Thereafter, the installation administrator 15 may use the information terminal 60 to take a picture of the construction environment and upload the picture to the server device 20 before logging out of the access to the server device 20. When there is another construction project, the installation administrator 15 continuously repeats the same installation settings for another construction project.

Next, detailed description is given of the installation setting flow of the charge and discharge system 10 according to the embodiment illustrated in Fig. 3.

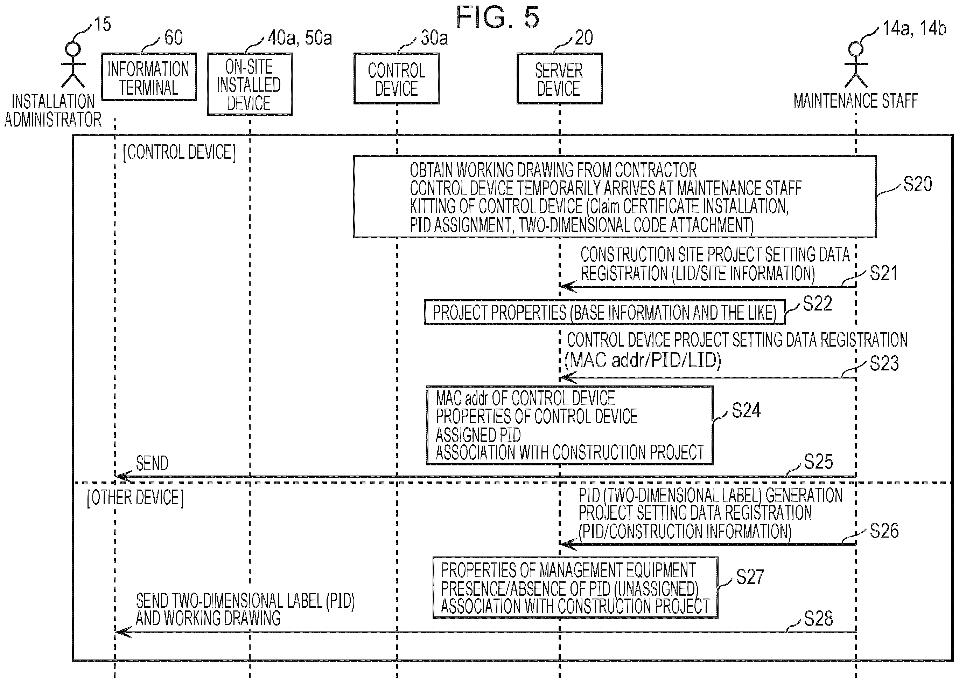

Fig. 5 is a sequence diagram illustrating preparatory work in the detailed installation setting flow of the charge and discharge system 10 according to the embodiment. Here, processing, operations, and interactions of the installation administrator 15 or the information terminal 60, the electrical device 40a or the other electrical device 50a, the control device 30a, the server device 20, and the maintenance staff 14a or 14b is illustrated.

In the preparatory work illustrated in this drawing, the maintenance staff 14a obtains the working drawing 32 from the contractor and performs kitting (that is, initial settings such as installation of OS, certificates, and the like) for the received control device 30a. The maintenance staff 14a assigns an identifier PID to the control device 30a, more specifically, attaches a two-dimensional code sticker 34 with the identifier PID printed thereon to the control device 30a (S20). The kitting of the control device 30a by the maintenance staff 14a is not essential, and the kitting may be performed in advance by a manufacturer of the control device 30a. In this event, the control device 30a is sent directly to the construction site or the installation administrator 15 without going through the maintenance staff 14a, and the installation administrator 15 attaches the two-dimensional code sticker 34 to the control device 30a.

Next, the maintenance staff 14a registers project setting data on the construction project in the server device 20 (S21). To be more specific, the maintenance staff 14a performs registration of physical information and logical information about the construction project, association between these information and the identifier PID or identifier LID (that is, creation of the tables 23b and 23c), and association between the identifiers PID and LID (that is, creation of the table 23a). Thus, the information (identifier PID or LID) to specify the construction project and properties of the construction project are stored in the server device 20 (S22).

The properties of the construction project include, for example, base information, contract information, and the like of the construction project. The information to specify the construction project corresponds to information to specify installation of at least one electrical device and control device according to the present disclosure. The properties of the construction project are stored together with the identifier LID assigned to each piece of property information in step S21. In step S21, the identifier LID assigned to each piece of property information may be associated with the information (identifier LID or PID) to specify the construction project.

Subsequently, the maintenance staff 14a registers project setting data for the control device 30a in the server device 20 (S23). To be more specific, along with the registration of physical information and logical information about the control device 30a, the maintenance staff 14a performs association between these information and the identifier PID or the identifier LID (that is, creation of the tables 23b and 23c) and association between the identifiers PID and LID (that is, creation of the table 23a). Thus, information (an identifier DID such as a MAC address, the identifier PID or the identifier LID) to specify the control device 30a and properties of the control device 30a are stored in the server device 20. Also, the identifier PID of the control device 30a and the information (for example, the identifier LID) to specify the construction project are associated and stored (S24). Among the information to specify the control device 30a, the identifier DID may not be registered in the server device 20 by the maintenance staff 14a, but may be registered in the server device 20 by the installation administrator 15. Alternatively, the identifiers DID and PID among the information to specify the control device 30a may not be registered in the server device 20 by the maintenance staff 14a, but may be registered in the server device 20 by the installation administrator 15. Note that the identifier PID of the control device 30a corresponds to the identifier PID assigned to the control device 30a in step S20. Examples of the properties of the control device 30a include the owner, model, and planned installation location of the control device 30a. The identifier LID associated with these pieces of property information in step S23 may be associated with the information (identifier LID or PID) to specify the control device.

Then, the maintenance staff 14a sends the control device 30a after the kitting to the installation administrator 15 (S25).

Subsequently, the maintenance staff 14a uses the server device 20 to generate a two-dimensional code (that is, an identifier PID) for a sticker to be attached to the electrical device 40a and other electrical device 50a installed on site, and print the generated two-dimensional code on the sticker. Thus, a bundle of two-dimensional code stickers 34 is generated and project setting data is registered (S26). To be more specific, for the electrical device 40a and the other electrical device 50a, physical information and logical information are registered, and these pieces of information are associated with the identifier LID (that is, the tables 23b and 23c are created). Thus, the information (identifier LID) to specify each of the electrical device 40a and the other electrical device 50a and the properties of each of the electrical device 40a and the other electrical device 50a are stored in the server device 20. Before the electrical device 40a and the other electrical device 50a are installed at the site, the server device 20 does not assign any identifier LID to specify those devices or any identifier PID to predetermined physical information, but some of these identifiers may be assigned. This clarifies whether there is the identifier PID for each of the electrical device 40a and the other electrical device 50a (that is, whether the identifier PID is assigned or not assigned to each of the electrical device 40a and the other electrical device 50a). Also, the information (identifier LID) to specify each of the electrical device 40a and the other electrical device 50a and the information (for example, the identifier LID) to specify the construction project are associated and stored (S27). In step S26, the identifier LID associated with each property information of the electrical device 40a and the other electrical device 50a may be associated with the information (for example, the identifier LID) to specify the electrical device 40a and the other electrical device 50a.

Finally, the maintenance staff 14a sends a bundle of two-dimensional code stickers 34 with the identifier PID printed thereon to the installation administrator 15 (S28).

Fig. 6 is a sequence diagram illustrating a setting process for the control device 30a on site in the detailed flow of installation setting of the charge and discharge system 10 according to the embodiment. This sequence diagram corresponds to details of step S10 (specification of construction project) and S11 (installation of the control device 30a) in Fig. 3.

When the installation administrator 15 accesses the server device 20 through the information terminal 60 at the site, the information terminal 60 notifies the server device 20 of the identifier PID to specify a construction project, and thus the construction project and the control device 30a installed for this construction project are specified in the server device 20 (S30). Note that the control device 30a installed for the construction project may be specified as follows, for example. The identifier LID of the construction project is specified from the correspondence relationship between the identifier PID of the construction project notified to the server device 20 and the identifiers PID and LID of the construction project prestored in the server device 20. Then, the control device 30a is specified from the correspondence relationship between the identifier LID of the construction project thus specified, the identifier LID of the construction project prestored in the server device 20, and the identifier PID of the control device 30a.

In response to the above step S30, the server device 20 instructs the installation administrator 15 through the information terminal 60 to read the identifier PID of the control device 30a (S31).

Upon receipt of such instruction, the installation administrator 15 reads the identifier PID printed on the sticker attached to the control device 30a (S32) and notifies the read identifier to the server device 20 (S33). This step S33 corresponds to a step in which the server device 20 acquires the identifier of the control device 30a from the information terminal 60.

In response, the server device 20 checks if the notified identifier PID matches the one already registered as the identifier PID of the control device 30a (that is, the identifier PID of the control device 30a registered in the server device 20 in steps S23 and S24) (S33a).

The checking in step S33a corresponds to a part of the step in which the server device 20 determines whether or not the acquired identifier of the control device 30a is appropriate. The identifier PID of the control device 30a already registered in the server device 20 is specified based on the identifier PID specifying the construction project, which is notified to the server device 20 in step S30. Therefore, it can also be said that step S33a is a process of determining whether or not the identifier of the control device read by the information terminal is appropriate by determining whether or not the correspondence relationship between the identifier of the control device read by the information terminal and the information to specify the construction project is appropriate.

When the acquired identifier PID matches the one already registered, the server device 20 instructs the installation administrator 15 through the information terminal 60 to turn on the control device 30a (S34).

When the installation administrator 15 turns on the control device 30a (S35), the control device 30a transmits an authentication request to the server device 20 (S36). The control device 30a and the server device 20 mutually authenticate each other. The server device authenticates the control device 30a, and when the authentication is completed without any problem, notifies the control device 30a of completion of the registration (S37).

The server device 20 notifies the installation administrator 15 through the information terminal 60 that the setting of the control device 30a is successfully completed (S38).

When the identifier PID of the control device 30a is not pre-registered in the server device 20 by the maintenance staff 14a, the identifier PID of the control device 30a read by the information terminal 60 in step S32 may be registered in the server device 20, eliminating the need to check if the identifier PID of the control device 30a read by the information terminal 60 is appropriate. In this event, the identifier PID of the control device 30a registered by the installation administrator 15 is registered in the server device 20 in association with the identifier LID of the control device 30a.

When the identifier DID of the control device 30a, besides the identifier PID of the control device 30a, is not pre-registered in the server device 20, the identifier DID of the control device 30a inputted to the information terminal 60 by the installation administrator 15 is also transmitted to the server device 20, and the server device 20 stores the identifiers PID and DID of the control device 30a in association with each other.

When the identifier DID of the control device 30a is not pre-registered by the maintenance staff 14a and the identifier PID of the control device 30a is pre-registered by the maintenance staff 14a, the identifier DID of the control device 30a inputted to the information terminal 60 by the installation administrator 15 between steps S30 and S31 is transmitted to the server device 20. In this event, the identifier DID of the control device 30a may be associated with the identifier (for example, the identifier LID) of the construction project specified in step S30 and also with the identifier PID of the control device 30a associated with the identifier of the construction project. Alternatively, when the identifier PID of the control device 30a read by the information terminal 60 in step S33a is determined to be appropriate, the identifier PID of the control device 30a may be associated with the identifier DID.

Fig. 7A is a sequence diagram illustrating a setting process of the electrical device 40a (particularly the chargers/dischargers 40 to 43) at the site in the detailed flow of the installation setting of the charge and discharge system 10 according to the embodiment. This sequence diagram corresponds to the details of step S12 (an example of setting of the electrical device 40a) in Fig. 3. Fig. 7B is a diagram illustrating display examples on the information terminal 60 for explaining the sequence diagram of Fig. 7A.

Upon receipt of the notification that the setting of the control device 30a has been successfully completed, the installation administrator 15 subsequently starts installation of the electrical device 40a via the information terminal 60 (S50 in Fig. 7A).

The server device 20 instructs the installation administrator 15 via the information terminal 60 to read the identifier PID of the electrical device 40a, set the IP address, and turn on the power (S51 in Fig. 7A). For example, the server device 20 instructs the information terminal 60 to perform setting of the electrical device 40a by displaying information indicating the electrical device 40a to be set on the information terminal 60 as in the display example illustrated in Fig. 7B(a) or 7(b). In the case of Fig. 7B(b), when a predetermined electrical device 40a is selected from among a plurality of electrical devices 40a, reading of an identifier PID of the selected electrical device 40a (for example, charger/discharger No. 1) may be instructed as illustrated in Fig. 7(a).

Step S51 corresponds to a step of instructing the information terminal to perform setting of the electrical device when the identifier of the control device read by the information terminal is determined to be appropriate in the step of determining whether or not the identifier is appropriate by the server device. In the setting of the control device 30a illustrated in Fig. 6, after it is determined in step S34 that the identifier of the control device 30a is appropriate, the setting processing of the control device 30a is performed via the server device 20 from the setting instruction such as the power-on instruction via the information terminal 60 to the setting completion notification via the information terminal 60 in step S41. However, the above step of instructing the terminal device also includes such a configuration. In the setting of the control device 30a in Fig. 6, when it is determined in step S34 that the identifier of the control device 30a is appropriate, the server device 20 may proceed to step S51, and the step of instructing the terminal device also includes such a configuration. In such a configuration, after it is determined in step S34 that the identifier of the control device 30a is appropriate, the setting of the control device 30a is completed on site by the installation administrator 15 without any interaction with the server device 20.

The installation administrator 15 performs the work details instructed in step S51, attaches one arbitrarily selected two-dimensional code sticker 34 to the electrical device 40a, and turns on the power of the electrical device 40a (that is, turns on a breaker and connects a LAN) (S52 in Fig. 7A). The work details instructed in step S51 may be, for example, IP setting (IP address setting) of the electrical device 40a. The IP setting of the electrical device 40a may be performed directly on the electrical device 40a by the installation administrator 15, or may be performed by the control device 30a.

The electrical device 40a that has been powered on requests the control device 30a to perform an initial setting operation (S53 in Fig. 7A). In this event, the control device 30a receives and holds the identifier DID of the electrical device 40a from the electrical device 40a. The identifier DID of the electrical device 40a may be, for example, the IP address of the electrical device 40a set by the installation administrator 15. This processing corresponds to a step in which the control device 30a acquires a sixth identifier of the electrical device 40a from the electrical device 40a when setting the electrical device 40a.

On the other hand, the installation administrator 15 uses the information terminal 60 to read the identifier PID printed on the attached sticker (S54 in Fig. 7A) and notifies the server device 20 of the read identifier PID together with the information indicating the electrical device 40a specified by the installation administrator 15 (for example, the name of the electrical device 40a shown on the screen of the information terminal 60 or on the working drawing 32) (S55 in Fig. 7A). This step S55 corresponds to a step of acquiring a first identifier of the electrical device 40a from the information terminal 60. The step in which the installation administrator 15 notifies the server device 20 of the information indicating the specified electrical device 40a corresponds to a step in which the server device 20 acquires the information indicating the electrical device 40a specified by an operator.

Here, the specification of the information indicating the electrical device 40a by the installation administrator 15 corresponds to, in the case of Fig. 7B(a), for example, selecting information indicating the electrical device 40a (for example, charger No. 1) displayed on the information terminal by the installation administrator 15.. On the other hand, the specification of the information indicating the electrical device 40a by the installation administrator 15 corresponds to, in the case of Fig. 7B(b), selecting a predetermined electrical device 40a from among the plurality of electrical devices 40a displayed on the information terminal by the installation administrator 15. The order of reading the identifier PID of the electrical device 40a and specifying the information indicating the electrical device 40a by the installation administrator 15 is arbitrary. Also, the notification of the identifier PID of the electrical device 40a read by the information terminal 60 and the notification of the information indicating the electrical device 40a specified by the installation administrator 15 may be sent at the same time or at different times. When the timing of notifications is different, the order of notifications is arbitrary.

Upon receipt of the identifier PID and the like, the server device 20 updates the project setting data by resolving the unassigned state of the received identifier PID (that is, updating the table 23a and the like) (S56 in Fig. 7A). To be more specific, the server device 20 associates the LID of the electrical device 40a in the project setting data with the received identifier PID. This step S56 corresponds to a step of storing the first identifier and a prestored second identifier of the electrical device 40a in association with each other when the server device 20 acquires the first identifier. Alternatively, when the electrical device 40a is specified by the operator, this step S56 corresponds to a step in which, when the operator acquires the information indicating the electrical device 40a specified by the operator and the first identifier, the server device 20 stores the first identifier and a prestored third identifier of the electrical device 40a specified by the operator in association with each other.

Thereafter, the server device 20 transmits information indicating work details required for setting to the information terminal 60 as necessary, and the information terminal 60 may display this information to instruct the installation administrator 15 to perform the setting. Here, examples of the information indicating the work details required for the setting include information instructing the installation administrator 15 to check the work instruction sheet and perform the setting, information instructing to change an operating mode of the electrical device 40a, information instructing to attach a peripheral device of the electrical device 40a, and the like, for example. Note that the IP address setting and power-on instructions in step S51 may not be executed, and these instructions may be included in the information indicating the work details described above instructed in and after step S57.

This processing of the server device 20 corresponds to a step of transmitting to the information terminal 60 information indicating the work details required for setting of the electrical device 40a when the server device 20 acquires the first identifier. This processing of the server device 20 also corresponds to a step of transmitting to the information terminal the information indicating the work details required for setting of the electrical device when the server device acquires the information indicating the electrical device specified by the operator and the first identifier. The information required for setting of the electrical device 40a may include the first identifier of the electrical device 40a.

In addition to or in place of the above setting instruction from the server device 20 to the installation administrator 15 via the information terminal 60, the server device 20 may transmit the information required for setting of the electrical device 40a (for example, software) to the control device 30a. This process corresponds to a step of transmitting the information required for setting of the electrical device to the control device when the information indicating the electrical device specified by the operator and the first identifier of the electrical device are acquired. Upon receipt of the information required for setting of the electrical device 40a, the control device 30a uses this information to perform setting of the electrical device 40a.

Then, the server device 20 notifies the control device 30a of the identifier PID whose unassigned state has been resolved (S57 in Fig. 7A). This step S57 corresponds to a step in which the server device 20 transmits the information required for setting of the electrical device 40a to the control device 30a upon acquisition of the first identifier. Alternatively, when the electrical device 40a is specified by the operator, this step S57 corresponds to a step in which the server device 20 transmits the information required for setting of the electrical device 40a to the control device 30a upon acquisition of the information indicating the electrical device 40a specified by the operator and the first identifier. Focusing on the reception operation by the control device 30a, this step S57 also corresponds to a step in which the control device 30a acquires from the server device 20 the information required for setting of the electrical device 40a including the first identifier of the electrical device 40a transmitted from the information terminal 60 to the server device 20.

Upon receipt of the notification of the identifier PID, the control device 30a associates the identifier DID of the electrical device 40a received from the electrical device 40a in step S53 with the identifier PID of the electrical device 40a just notified from the server device 20 (S58 in Fig. 7A).

In this event, the control device 30a holds the identifier PID and device properties (information that can be specified on the working drawing 32) of the electrical device 40a notified from the information terminal 60. This processing corresponds to a step in which the control device 30a acquires the sixth identifier of the electrical device 40a from the electrical device 40a when setting the electrical device 40a.

Step S58 corresponds to a step in which the control device 30a stores the first identifier of the electrical device 40a received from the server device 20 and the sixth identifier of the electrical device 40a received from the electrical device 40a in step S53 in association with each other.

Thereafter, the control device 30a performs device setting (for example, charger/discharger setting) for the target electrical device 40a (S59 in Fig. 7A). Upon completion of the device setting, the server device 20 is notified that the setting of the electrical device 40a has been successfully completed as a device registration response (S60 in Fig. 7A).

The electrical device 40a (for example, charger/discharger) for which the device setting (S59 in Fig. 7A) has been completed turns on the LED (S61 in Fig. 7A), although this is an asynchronous process. Upon receipt of the device registration response from the control device 30a, the server device 20 notifies the installation administrator 15 of completion of registration and instructs a next operation via the information terminal 60 (S62 in Fig. 7A).

The above installation setting process illustrated in Fig. 7A is repeated by the number of the electrical devices 40a installed on site.

Fig. 8A is a sequence diagram illustrating the flow for the electrical device 40a (particularly, the multi-circuit wattmeters 45a and 45b) on site in the detailed flow of installation setting of the charge and discharge system 10 according to the embodiment. This sequence diagram corresponds to the details of step S12 in Fig. 3 (another example of setting of the electrical device 40a). Fig. 8B is a diagram illustrating display examples on the information terminal 60 for explaining the sequence diagram of Fig. 8A.

Upon receipt of the notification that the setting of the control device 30a or the chargers/dischargers 40 to 43 has been successfully completed, the installation administrator 15 starts the installation of the multi-circuit wattmeter 45a and the like via the information terminal 60 on site (S70). The server device 20 instructs the installation administrator 15 via the information terminal 60 to read and set the identifier PID of the multi-circuit wattmeter 45a and the like (S71). When step S70 is performed after the setting of the control device 30a is completed, this step S71 corresponds to a step of instructing the information terminal 60 to perform setting of the electrical device 40a when the identifier of the control device 30a read by the information terminal 60 is determined to be appropriate in the step of determining whether or not the identifier is appropriate by the server device 20. What configuration is included in this step is the same as in the setting of the chargers/dischargers 40 to 43.

Upon receipt of the instruction, the installation administrator 15 attaches an arbitrarily selected two-dimensional code sticker 34 to the multi-circuit wattmeter 45a or the like in accordance with the working drawing 32 (S72), reads the identifier PID printed on the attached sticker with the information terminal 60 (S73), and notifies the server device 20 of the read identifier PID together with information indicating the multi-circuit wattmeter 45a or the like specified by the installation administrator 15 (for example, information indicating the multi-circuit wattmeter 45a or the like shown on the screen of the information terminal 60 or on the working drawing 32) (S74). In step S72, connection work of the CT 50 and the like is performed. Also, connection to a distribution boards and multi-circuit wattmeters is perform.

Here, specification of the information indicating the multi-circuit wattmeter 45a and the like by the installation administrator 15 corresponds to selecting information indicating the multi-circuit wattmeter 45a or the like (for example, multi-circuit wattmeter No. 1), which is displayed on the information terminal, by the installation administrator 15 in the case of Fig. 8B(a), for example. On the other hand, in the case of Fig. 8B(b), the specification of the information indicating the multi-circuit wattmeter 45a and the like by the installation administrator 15 corresponds to selecting a predetermined electrical device 40a, by the installation administrator 15, from among the plurality of multi-circuit wattmeters 45a displayed on the information terminal. The order of reading the identifier PID of the multi-circuit wattmeter 45a and the like and specifying the information indicating the multi-circuit wattmeter 45a and the like by the installation administrator 15 is arbitrary. Further, the notification of the identifier PID of the multi-circuit wattmeter 45a and the like read by the information terminal 60 and the notification of the information indicating the multi-circuit wattmeter 45a and the like specified by the installation administrator 15 may be sent at the same time or at different times. When the timing of notifications is different, the order of notifications is arbitrary.

Upon receipt of the identifier PID of the multi-circuit wattmeter 45a or the like, the server device 20 cancels the unassigned state of the received identifier PID of the multi-circuit wattmeters 45a or the like (that is, updates the table 23a and the like) and thus updates the project setting data (S75). To be more specific, the LID of the multi-circuit wattmeter 45a or the like in the project setting data is associated with the received identifier PID.

Then, the server device 20 notifies the control device 30a of the identifier PID and a setting file of the multi-circuit wattmeter 45a or the like, for which the unallocated state has been resolved (S76). Upon receipt of the notification of the identifier PID, the control device 30a uses the received setting file to perform device setting for the multi-circuit wattmeter 45a or the like, and reports the completion of the setting to the server device 20 (S77).

After step S77, the server device 20 may instruct to read the identifier PID of the CT 50 that is in a communication connection or electrical connection with the multi-circuit wattmeter 45a or the like whose setting has been completed. In this event, the installation administrator 15 uses the information terminal 60 to read the identifier PID of the CT 50 and notifies the read identifier to the server device 20, and then the setting of the CT 50 is performed. When the setting of the CT 50 is completed, the server device 20 instructs the information terminal 60 to perform setting of the next multi-circuit wattmeter 45a and the like in the configuration as illustrated in Fig. 8B(a) or 8B(b). The identifier PID of the CT 50 may be a two-dimensional code displayed on a sticker attached to the CT 50 by the installation administrator 15.

Finally, the server device 20 notifies the installation administrator 15 via the information terminal 60 that the setting of the multi-circuit wattmeter 45a or the like and the CT 50 or the like that is in communication connection or electrical connection therewith has been successfully completed (S78).

The above installation setting process illustrated in Fig. 8A is repeated by the number of the multi-circuit wattmeters 45a and 45b installed on site.

Fig. 8C is a sequence diagram illustrating a flow for the other electrical device 50a (particularly, the CTs 50 to 54) on site in the detailed flow of installation setting of the charge and discharge system 10 according to the embodiment. This sequence diagram corresponds to the details of step S13 in Fig. 3 (an example of registration of another electrical device 50a). Fig. 8D is a diagram illustrating display examples on the information terminal 60 for explaining the sequence diagram of Fig. 8C.

After completing the setting of each multi-circuit wattmeter 45a or the like or after completing the setting of all the multi-circuit wattmeters 45a and 45b, the installation administrator 15 starts setting of the CT 50 and the like (S80) and instructs reading and setting of an identifier PID of the CT50 or the like in a configuration as illustrated in Fig. 8D(a) (S81). In step S81, the installation administrator 15 may select the CT 50 or the like to be set in a configuration illustrated in Fig. 8(b), instead of Fig. 8D(a).

For the CT 50 or the like whose setting has been instructed, the installation administrator 15 attaches a two-dimensional code sticker 34 as the identifier PID to the CT 50 or the like, and performs a setting operation for the CT 50 or the like (for example, connecting the CT to the distribution board and the multi-circuit wattmeter) (S82). Then, the installation administrator 15 reads the identifier PID of the CT 50 or the like (S83) and notifies the read identifier to the server device 20 (S84). The server device 20 associates the received identifier PID of the CT50 or the like with the identifier LID of the CT 50 or the like (S85), and notifies the information terminal 60 of completion (S86).

Before the above notification of completion, information required for setting of the CT 50 or the like (for example, a setting file of the CT) may be transmitted from the server device 20 to the multi-circuit wattmeter 45a or the like via the control device 30a, and the multi-circuit wattmeter 45a or the like may perform the setting of the CT 50 or the like based on this information. Then, completion of the setting may be transmitted from the multi-circuit wattmeter 45a or the like to the server device 20 via the control device 30a. Upon receipt of the completion of the setting, the server device 20 may send a setting completion notification to the information terminal 60.

When setting the CT 50 and the like every time setting of each multi-circuit wattmeter 45a or the like is completed, the server device 20 instructs setting of the next multi-circuit wattmeter 45b or the like after the setting of all the CTs connected to a predetermined multi-circuit wattmeter is completed.

The instruction to read the identifier PID of the CT 50 or the like by the information terminal 60 corresponds to a step in which the server device 20 transmits to the information terminal 60 an instruction to acquire a fourth identifier of the other electrical device 50a that is in communication connection or electrical connection with the electrical device 40a or a step of transmitting to the information terminal 60 an instruction to acquire a fifth identifier of another electrical device 50a that requires communication connection or electrical connection with the electrical device 40a. More specifically, when the electrical device 40a and the other electrical device 50a are already in communication connection or electrical connection with each other, the instruction to read the identifier PID of the CT 50 or the like by the information terminal 60 corresponds to the former step, and if not, corresponds to the latter step.

Alternatively, the server device 20 may instruct the installation administrator 15 via the information terminal 60 to establish communication connection or electrical connection between the multi-circuit wattmeter 45a or the like and the CT 50 or the like, whose identifier PIDs have been acquired. Examples of specific instruction details include an instruction to electrically connect the CT50 or the like to the multi-circuit wattmeter 45a or the like by wiring. In this event, the setting instruction for the CT 50 or the like in step S81 is not executed, or the above connection instruction is not included in the setting instruction for the CT 50 or the like in step S81. This instruction corresponds to a step in which, upon acquisition of the fifth identifier of the other electrical device 50a that requires communication connection or electrical connection with the electrical device 40a via the information terminal 60, the server device 20 instructs the information terminal 60 to establish communication connection or electrical connection between the other electrical device 50a and the electrical device 40a.

When the server device 20 acquires via the information terminal 60 the fourth identifier of the other electrical device 50a that is in communication connection or electrical connection with the electrical device 40a, a step of transmitting information for checking the connection between the other electrical device 50a and the electrical device 40a to the control device 30a may be performed. Thus, the multi-circuit wattmeter 45a or the like can receive information for checking connection from the server device 20 via the control device 30a and check the connection with the CT 50 or the like based on this information.

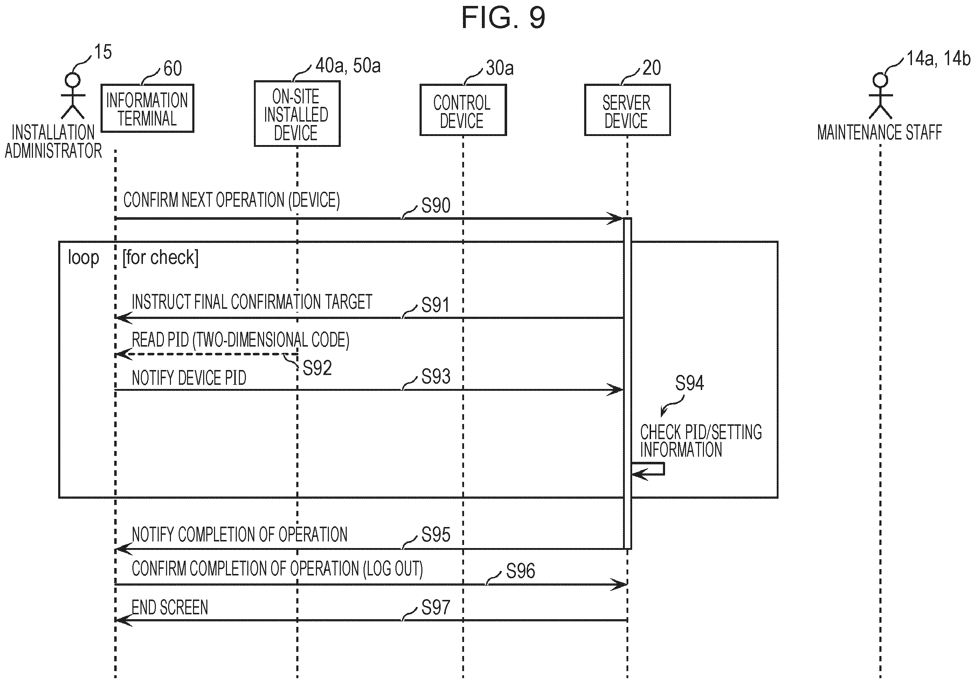

Fig. 9 is a sequence diagram illustrating an on-site confirmation process in the detailed flow of the installation setting of the charge and discharge system 10 according to the embodiment. This sequence diagram corresponds to the details of step S14 (confirmation of installation setting) in Fig. 3.

By accessing the server device 20 using the web application in the information terminal 60, the installation administrator 15 requests the server device 20 to follow the confirmation procedure for the control device 30a, the electrical device 40a, and the other electrical device 50a to check if there is any error in the settings thereof (S90). For example, the installation administrator 15 specifies a name (or receives a specified name) of a target on-site installed device, reads a two-dimensional code, and notifies the server device 20 of the read two-dimensional code. The installation administrator 15 receives a final confirmation target instruction from the server device 20 (S91). In response, the installation administrator 15 reads the two-dimensional code of the on-site installed device as the instruction target (S92) and notifies the server device 20 of the read two-dimensional code (S93). Note that steps S91 to S93 are repeated for the device to be confirmed.

Upon receipt of the notification described above, the server device 20 checks the consistency or the like with the registered identifier PID and setting information (S94). For example, the server device 20 checks consistency with the already registered identifier PID and the corresponding information by checking the transmitted identifier PID against the project setting data registered in the tables 23a to 23c.

Then, the server device 20 notifies the installation administrator 15 of the check result as a work completion notification via the information terminal 60 (S95).

Upon receipt of the as work completion notification, the installation administrator 15 confirms the work completion with (that is, logs out of) the server device 20 via the information terminal 60 (S96). Finally, the server device 20 ends the confirmation process by transmitting an end screen to the information terminal 60 (S97).

As described above, the device setting support method according to this embodiment is a method in which the server device 20 communicably connected to the information terminal 60 supports setting of at least one electrical device 40a controlled by the control device 30a, the method including the steps of: acquiring the identifier of the control device 30a from the information terminal 60 (S33 in Fig. 6); determining whether or not the identifier is appropriate; and when determining that the identifier is appropriate in the above determination, instructing the information terminal 60 to perform setting of the electrical device 40a (S51 in Fig. 7A).

Accordingly, when it is determined that the control device 30a connected to the server device 20 is appropriate, the information terminal 60 is instructed to perform setting of the electrical device 40a controlled by the control device 30a. Therefore, even in a system with a hierarchized control structure in which the server device 20 does not recognize the identifier of the electrical device 40a before installation setting, the setting of the electrical device 40a is supported.

In the device setting support method according to this embodiment, the information terminal 60 may be instructed to perform the setting of the electrical device 40a upon acquisition of the identifier of the control device 30a via the information terminal 60, instead of including the step of determining whether or not the identifier is appropriate.

The server device 20 according to this embodiment is a device that is communicably connected to the information terminal 60 and supports setting of at least one electrical device 40a controlled by the control device 30a. The server device 20 includes: the communication unit 22 that acquires the identifier of the control device 30a from the information terminal 60; and the control unit 25 that determines whether or not the identifier is appropriate. When determining that the identifier is appropriate, the control unit 25 instructs the information terminal 60 via the communication unit 22 to perform setting of the electrical device 40a.

Thus, when determining that the control device 30a is appropriate, the server device 20 instructs the information terminal 60 to perform setting of the electrical device 40a controlled by the control device 30a. Therefore, even in a system with a hierarchized control structure in which the server device 20 does not recognize the identifier of the electrical device 40a before installation setting, the setting of the electrical device 40a is supported.

Note that the control unit 25 does not necessarily have to determine whether or not the identifier is appropriate, but may instruct the information terminal 60 via the communication unit 22 to perform the setting of the electrical device 40a upon acquisition of the identifier of the control device 30a from the information terminal 60 via the communication unit 22.

Although the device setting support method and the server device according to the present disclosure have been described above based on the embodiment, the present disclosure is not limited to this embodiment. Various modifications of the embodiment that would be conceived by those skilled in the art, and other configurations constructed by combining some of the constituent components in the embodiment are also included in the scope of the present disclosure without departing from the gist of the present disclosure.

For example, although the target of the device setting support is the charge and discharge system 10 in the above embodiment, the present disclosure is not limited thereto. The target system of the device setting support may be a remote control system, a building management system, a parking management system, a household appliance control system, or the like as long as the system has a hierarchized control structure.

In the above embodiment, there are a plurality of electrical devices 40a to be supported for device setting, but only one device may be provided. Likewise, the other electrical device 50a to be supported for device setting does not have to be provided. As long as there is at least one on-site installed device to be supported for device setting, the feature of device setting support is achieved.

Further, the subject matter for achieving the object of the present disclosure may be a program for a computer to execute each of the steps included in the device setting support method, or a non-transitory computer readable recording medium such as a DVD storing the program.

### Industrial Applicability

The present disclosure can be utilized for a device setting support method and a server device that support setting of an electrical device through communication with an information terminal, particularly a server device that can support setting of an electrical device in a system with a hierarchized control structure, for example, a server device that supports setting of an electrical device such as a charger/discharger in a charge and discharge system.

### Reference Signs List

10 charge and discharge system
12 communication network
14a, 14b maintenance staff
15 installation administrator30 controller
20 server device
21 input unit
22 communication unit
23 storage unit
23a to 23c, 30ab table
24 output unit
25 control unit
30 controller
30a control device
30aa, 40aa, 50aa physical identifier
32 working drawing
34 two-dimensional code sticker
40 to 43 charger/discharger
40a electrical device
45a, 45b multi-circuit wattmeter
50 to 54 CT
50a other electrical device
60 information terminal

## Claims

1. A device setting support method in which a server device communicably connected to an information terminal supports setting of at least one electrical device controlled by a control device, the method comprising the steps of:
acquiring an identifier of the control device from the information terminal; and
instructing the information terminal to perform setting of the electrical device upon acquisition of the identifier.

2. The device setting support method according to claim 1, further comprising the step of:
determining whether or not the identifier is appropriate upon acquisition of the identifier, wherein
the information terminal is instructed to perform setting of the electrical device when the identifier is determined to be appropriate in the determination.

3. The device setting support method according to claim 2, further comprising the step of:
acquiring information for specifying installation of the at least one electrical device and the control device, wherein
in the step of determining whether or not the identifier is appropriate, it is determined whether or not the identifier is appropriate by determining whether or not correspondence between the identifier and the information is appropriate.

4. The device setting support method according to claim 1 or 2, wherein
in the step of instructing the information terminal, the information terminal is instructed to perform the setting of the electrical device by displaying information indicating the electrical device to be set on the information terminal.

5. The device setting support method according to claim 4, further comprising the steps of:
acquiring a first identifier of the electrical device from the information terminal; and
transmitting information indicating work details required for setting of the electrical device to the information terminal upon acquisition of the first identifier.

6. The device setting support method according to claim 4, further comprising the steps of:
acquiring a first identifier of the electrical device from the information terminal; and
transmitting information required for setting of the electrical device to the control device upon acquisition of the first identifier.

7. The device setting support method according to claim 4, further comprising the steps of:
acquiring a first identifier of the electrical device from the information terminal; and
storing the first identifier and a prestored second identifier of the electrical device in association with each other upon acquisition of the first identifier.

8. The device setting support method according to claim 1 or 2, wherein
in the step of instructing the information terminal, the information terminal is instructed to perform the setting of the electrical device by displaying on the information terminal information for an operator of the information terminal to specify the electrical device to be set.

9. The device setting support method according to claim 8, further comprising the steps of:
acquiring a first identifier of the electrical device from the information terminal;
acquiring information indicating the electrical device specified by the operator; and
transmitting to the information terminal information indicating work details required for setting of the electrical device upon acquisition of the information indicating the electrical device specified by the operator and the first identifier.

10. The device setting support method according to claim 8, further comprising the steps of:
acquiring a first identifier of the electrical device from the information terminal;
acquiring information indicating the electrical device specified by the operator; and
transmitting to the control device information required for setting of the electrical device upon acquisition of the information indicating the electrical device specified by the operator and the first identifier.

11. The device setting support method according to claim 8, further comprising the steps of:
acquiring a first identifier of the electrical device from the information terminal;
acquiring information indicating the electrical device specified by the operator; and
storing the first identifier and a prestored third identifier of the electrical device specified by the operator in association with each other upon acquisition of the information indicating the electrical device specified by the operator and the first identifier.

12. The device setting support method according to claim 6, wherein
the information required for setting of the electrical device includes a first identifier of the electrical device.

13. The device setting support method according to any one of claims 1 to 12, wherein
the identifier of the control device includes an image code.

14. The device setting support method according to any one of claims 5 to 7 and 9 to 12, wherein
the first identifier of the electrical device includes an image code.

15. The device setting support method according to any one of claims 5, 6, 9, and 10, further comprising the steps of:
transmitting to the information terminal an instruction to acquire a fourth identifier of another electrical device that is communicably or electrically connected to the electrical device; and
transmitting to the control device information for checking the connection between the other electrical device and the electrical device upon acquisition of the fourth identifier from the information terminal.

16. The device setting support method according to claim 15, wherein
the fourth identifier of the other electrical device includes an image code.

17. The device setting support method according to any one of claims 5, 6, 9, and 10, further comprising the steps of:
transmitting to the information terminal an instruction to acquire a fifth identifier of another electrical device that requires communication connection or electrical connection with the electrical device; and
instructing the information terminal to establish communication connection or electrical connection between the other electrical device and the electrical device upon acquisition of the fifth identifier from the information terminal.

18. The device setting support method according to claim 17, wherein
the fifth identifier of the other electrical device includes an image code.

19. A server device that is communicably connected to an information terminal and supports setting of at least one electrical device controlled by a control device, comprising:
a communication unit that acquires an identifier of the control device from the information terminal; and
a control unit that instructs the information terminal to perform setting of the electrical device via the communication unit upon acquisition of the identifier.
